(19) Europäisches Patentamt / European Patent Office / Office européen des brevets

(11) **EP 3 341 679 B1**

(12) **EUROPÄISCHE PATENTSCHRIFT**

(45) Veröffentlichungstag und Bekanntmachung des Hinweises auf die Patenterteilung:
**24.06.2020  Patentblatt 2020/26**

(51) Int Cl.:
*G01B 11/30* (2006.01)     *G01N 21/88* (2006.01)
*G01N 21/47* (2006.01)     *G01N 21/95* (2006.01)

(21) Anmeldenummer: **16765932.5**

(22) Anmeldetag: **25.08.2016**

(86) Internationale Anmeldenummer:
**PCT/EP2016/070033**

(87) Internationale Veröffentlichungsnummer:
**WO 2017/032819 (02.03.2017 Gazette 2017/09)**

(54) **VERFAHREN UND EINRICHTUNG ZUR BERÜHRUNGSLOSEN BEURTEILUNG DER OBERFLÄCHENBESCHAFFENHEIT EINES WAFERS**

METHOD AND DEVICE FOR CONTACTLESS ASSESSMENT OF THE SURFACE QUALITY OF A WAFER

PROCÉDÉ ET DISPOSITIF D'ÉVALUATION SANS CONTACT DE L'ÉTAT DE SURFACE D'UNE TRANCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2015  DE 102015114065**

(43) Veröffentlichungstag der Anmeldung:
**04.07.2018  Patentblatt 2018/27**

(73) Patentinhaber: **Brodmann Technologies GmbH**
**76476 Bischweier (DE)**

(72) Erfinder:
• **BRODMANN, Rainer**
**76476 Bischweier (DE)**
• **BRODMANN, Boris**
**76131 Karlsruhe (DE)**

(74) Vertreter: **Schaumburg und Partner**
**Patentanwälte mbB**
**Postfach 86 07 48**
**81634 München (DE)**

(56) Entgegenhaltungen:
**DE-A1- 3 503 858     US-A1- 2012 092 656**

• **Rainer Brodmann ET AL: "Kenngrößen der Mikrostruktur definiert", QZ, 1. Juli 2008 (2008-07-01), Seiten 46-49, XP055287385, Gefunden im Internet: URL:http://vda-qmc.de/fileadmin/redakteur/presse/Kenngroessen_der_Mikrostruktur_definiert.pdf [gefunden am 2016-07-11]**
• **ANONYMOUS ED - VDA: "VDA 2009 - Gemoetrische Produktspezifikation: Oberflächenbeschaffenheit: Winkelaufgeloeste Streulichtmesstechnik; Definition, Kerngrössen und Anwendung", VDA EMPFEHLUNG, VDA, DE , vol. VDA 2009 1 July 2010 (2010-07-01), pages 1-14, XP009500116, Retrieved from the Internet: URL:https://www.vda.de/de/services/Publikationen/2009---winkelaufgel-ste-streulichtmesstechnik.html**

EP 3 341 679 B1

**Beschreibung**

Die Erfindung betrifft ein Verfahren zur berührungslosen Beurteilung der Oberflächenbeschaffenheit eines scheibenförmigen, feinbearbeiteten Werkstücks, insbesondere eines Wafers, nach der winkelaufgelösten Streulichtmesstechnik, bei dem ein optischer Sensor ein Strahlenbündel mit definierter Intensitätsverteilung auf die zu beurteilende Oberfläche des Werkstücks aussendet und einen Messfleck beleuchtet, wobei die zurück reflektierte Intensität der Strahlung mittels eines Zeilensensors mit einer diskreten Anzahl von Fotodetektoren in einem definierten Winkelbereich detektiert und aus der detektierten Intensität mindestens ein Kennwert zur Oberflächenbeschaffenheit berechnet wird. Ferner betrifft die Erfindung eine Einrichtung zum Durchführen des Verfahrens.

Die winkelaufgelöste Streulichtmesstechnik mit zugehörigem Sensor ist in der VDA-Empfehlung VDA 2009 aus Juli 2010 (VDA Verband der Automobilindustrie) ausführlich beschrieben. Diese Streulichtmesstechnik eignet sich aufgrund der Robustheit des Verfahrens und der hohen Messgeschwindigkeit sowohl zur 100 % Online-Überwachung eines Prozesses, als auch speziell zur berührungslosen Messung der Rauheit quer zur Bearbeitungsrichtung (Querrauheit) und längs zur Bearbeitungsrichtung (Längsrauheit) sowie zur Form- und Welligkeitsmessung. Gemessen wird hierbei die Winkelverteilung der Oberfläche einer feinbearbeiteten Oberfläche über rückgestreutes Licht. Daraus können sowohl Kennwerte für die Struktur der Oberfläche als auch Formmerkmale wie z.B. Ebenheit, Rundheit, Welligkeit, Rattermarken etc. berechnet werden. Als Kenngröße zur Beurteilung der Beschaffenheit einer Oberfläche kann z.B. die Varianz der Streuwinkelverteilung Aq als Maß für die Mikrostruktur der Oberfläche verwendet werden.

Weiterhin ist die Streulichtmesstechnik in der EP 2 657 686 A1 und der Veröffentlichung "Kenngrößen der Mikrostruktur definiert", Rainer Brodmann et al., QZ Jahrgang 53 (2008), 7, S. 46-49, beschrieben. Der Streulichtsensor erfasst je nach Orientierung die Intensitätsverteilung quer oder längs zur Bearbeitungsrichtung des Werkstücks. Aus der Verteilungskurve können dann statistische Kennwerte berechnet werden, die Informationen über die Quer- oder Längsrauheit enthalten. Die wichtigsten Kennwerte sind hierbei Aq und M, worin M der Mittelwert der Verteilungskurve und damit der Schwerpunkt der Verteilungskurve ist.

Ein wichtiger Anwendungsfall ist die Prüfung der Oberfläche von scheibenförmigen Werkstücken, insbesondere von Wafern. Bei der Herstellung von ICs (Integrated Circuit; integrierte Schaltungen) ist eine zunehmende Forderung, die einzelnen ICs so dünn wie möglich herzustellen. Ausgangsmaterial bei der IC-Herstellung sind meist Siliciumscheiben (Wafer) mit einem Durchmesser von 200 bis 300 mm und einer Dicke von 500 bis 725 $\mu$m. Die eigentlichen elektronischen Hardware-Elemente befinden sich nach der Fertigung in nur wenigen

$\mu$m Tiefe, was bedeutet, dass 99 % des Materials mehr oder weniger nutzlos ist. Diese relativ große Dicke, die beim Herstellprozess für die ICs vorteilhaft ist, ist andererseits nachteilig im Hinblick auf eine notwendige Kühlung der ICs von der Rückseite her, wenn die ICs mit beträchtlicher Gesamtdicke in einem elektronischen Gerät verwendet würden. Aus diesem Grund werden Wafer vor dem Abtrennen der ICs und deren Vereinzelung von der unbearbeiteten Rückseite her durch einen Schleifprozess gedünnt (engl. thinning). Dieses sogenannte Rückseiten-Schleifen (engl. back grinding) von prozessierten Wafern ist heute ein Standard-Verfahren, wobei Enddicken von unter 200 $\mu$m erreicht werden. Die Entwicklung geht dahin, die Dicke durch Rückseiten-Schleifen bis in den 50 $\mu$m-Bereich hinein zu verkleinern. Je dünner der Wafer geschliffen wird, um so sorgfältiger muss die Bearbeitung erfolgen, damit die auftretenden Schleifkräfte und der Oberflächenabtrag, insbesondere in der Endphase der Bearbeitung kurz vor dem Erreichen der Zieldicke, keine allzu großen Auswirkungen auf die darunter befindlichen elektronischen Schaltelemente der ICs haben. Dabei sollten die Schleifkräfte möglichst homogen verteilt werden und wegen der in engen Grenzen einzuhaltenden Prozessparameter (u.a. Schleifscheibenkorngröße, Rotationsgeschwindigkeit und Druck der Schleifscheibe), sollte die Oberflächenrauheit und Oberflächenverformung (Verwölbung, Welligkeit etc.) auf der gesamten Waferfläche so gering wie möglich und gleichmäßig sein. Ist dies nicht der Fall, können Stress und Mikrorisse die Funktion der ICs beeinträchtigen oder zerstören. Bei Wafern mit einem Dickenbereich von ca. 50 $\mu$m sollte z.B. die Rauheit nicht mehr als 1 bis 3 nm Ra (Mittenrauwert) betragen. In vielen Fällen erfolgt nach dem ultrafeinen Schleifen noch ein zusätzlicher CMP-Prozessschritt (CMP: Chemical Mechanical Polishing oder Chemical Mechanical Planarisation) zur weiteren Reduzierung der Rauheit und Feinwelligkeit.

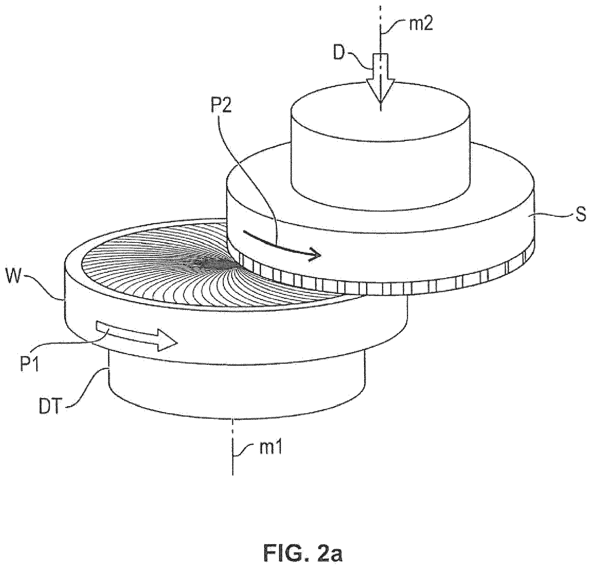

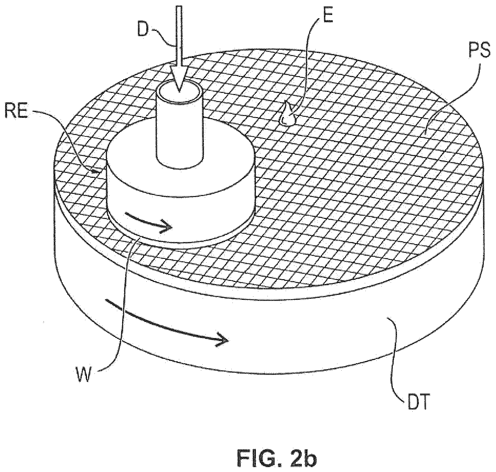

In Figur 2a ist das Grundprinzip für das Rückseiten-Schleifen dargestellt. Eine als Topfscheibe ausgebildete Schleifscheibe S, die leicht gekippt ist, trägt von der Oberfläche eines Wafers W auf seiner Rückseite Material ab, wobei sowohl die Schleifscheibe S als auch der Wafer W rotieren. Dieser Schleifprozess hinterlässt je nach Schleifstufe (grob, mittel, fein und superfein) auf dem Wafer W S-förmige Schleifrillen bzw. Schleifriefen. Diese sind bis in den feinsten Bereich der Oberfläche hinein noch zu erkennen, beim superfeinen Schleifprozess (super finishing) sind diese jedoch nur noch schwer mit dem bloßen Auge zu erkennen. Sollen auch diese Bearbeitungsspuren noch weiter verringert werden, kommt das CMP-Verfahren zum Einsatz. Bei diesem in Fig. 2b dargestellten Verfahren, ist der Wafer W auf der Unterseite einer Rotationseinheit RE befestigt und wird relativ zu einer rotierenden Polierscheibe PS verdreht, die auf dem Drehtisch DT aufgebracht ist. Als Poliermittel wird eine chemische Emulsion E aufgebracht, die die Waferoberfläche sehr schonend weiter glättet. Der Rauheitswert Ra verringert sich hierbei auf deutlich unter 1 nm. Dies hat auch positive Auswirkungen auf die Formabweichung und im Hinblick auf die Nanotopografie auf die Welligkeit.

Für die Qualitätssicherung an solchen Wafer-Werkstücken, was die Dicke und Verwölbung betrifft, gibt es im Stand der Technik eingeführte Messverfahren, die mit optischen Tastern auch ganzflächig über die Oberfläche des Wafers hinweg Unterschiede im Submikrometerbereich messen können. Zur Messung der Rauheit gibt es im Stand der Technik Verfahren, die punktuell auf der Oberfläche die Rauheit messen, beispielsweise an fünf ausgewählten Stellen der Wafer-Oberfläche. Als Messverfahren dienen hier u.a. interferometrisch arbeitenden Messmikroskope oder Atomkraftmikroskope (AFM). Von der Gesamtfläche eines Wafers mit einem Durchmesser von 300 mm, d.h. von $70650$ mm$^2$, wird bei der Fünf-Punkte-Messung mit einem Messfleck von jeweils 1 mm$^2$ lediglich ein verschwindend kleiner Bruchteil der bearbeiteten Fläche beurteilt. Wünschenswert wäre jedoch eine genaue Prüfung der gesamten Oberfläche des Wafers hinsichtlich Rauheit, Form und der Nanotopografie, insbesondere Welligkeit.

Aus der DE 44 08 226 A1 ist eine Messeinrichtung zur Bestimmung der Rauheit der technischen Oberfläche durch Auswertung chromatischer Specklemuster bekannt, die auf der Lichtstreuung an rauen Oberflächen beruht. Ein Oberflächenabschnitt wird mittels eines oder mehrerer Strahlenbündel di- oder polychromatisch beleuchtet und das von der rauen Oberfläche ausgesandte Streulicht wird mittels eines Detektor-Arrays detektiert und als Graustufenbild in einem Datenspeicher abgespeichert. Dieses gespeicherte Bild wird nach bestimmten Kriterien ausgewertet und daraus Rauheitskennwerte ermittelt.

Aus der DE 10 2012 005 417 B4 ist eine Vorrichtung und ein Verfahren zur winkelaufgelösten Streulichtmessung bekannt, bei der bzw. bei dem eine Detektoreinrichtung mindestens zwei an der Oberfläche gestreute Anteile eines zurück reflektierten Lichts erfasst werden. Aus den gestreuten Anteilen des Lichts wird eine spektrale Leistungsdichte bestimmt und aus dieser auf Rauheitsparameter geschlossen.

US 2012/092656 A1 beschreibt ein Verfahren und eine Einrichtung zur Inspektion einer Oberfläche auf Fehler. Hierbei wird auf die Oberfläche ein Strahlenbündel mit definierter Intensitätsverteilung ausgesendet und ein Messfleck beleuchtet. Die von diesem Messfleck zurück reflektierte Intensität der Strahlung wird mit mehreren Zeilensensoren mit jeweils einer diskreten Anzahl von Fotodetektoren in einem definierten Winkelbereich detektiert und die Signale dieser Fotodetektoren durch eine Verarbeitungseinheit ausgewertet. Mit Hilfe dieser Signale kann dann auf einen Oberflächenfehler geschlossen werden. Eine scheibenförmige Oberfläche wird in Drehung versetzt und diese Oberfläche flächenhaft, spiralförmig abgetastet.

Es ist Aufgabe der Erfindung, ein Verfahren und eine Einrichtung zur berührungslosen Beurteilung der Oberflächenbeschaffenheit eines scheibenförmigen Werkstücks anzugeben, bei dem bzw. bei der eine großflächige Oberflächenbeurteilung mit hoher Genauigkeit und hoher Abtastgeschwindigkeit erfolgen kann.

Diese Aufgabe wird für ein Verfahren nach den Merkmalen des Anspruchs 1 gelöst. Vorteilhafte Weiterbildungen sind in den abhängigen Ansprüchen angegeben.

Bei scheibenförmigen, feinbearbeiteten Werkstücken hat die Rauheitsstruktur der Oberfläche im Allgemeinen eine Vorzugsrichtung. Beispielsweise bei Wafern ergibt sich aufgrund einer Rotation der Schleifscheibe in Verbindung mit der Rotation des Wafers S-förmige Schleifriefen (vgl. hierzu Figur 2). An solchen anisotropen Oberflächen ist eine Längsrauheit in Richtung der Schleifriefen und quer hierzu eine Querrauheit definiert. Für eine Kennwertbildung zur Oberflächenbeschaffenheit ist es nun wichtig, die Ausrichtung des optischen Sensors an einer Messposition festzulegen, so dass eindeutige und aussagekräftige Kennwerte unter Einbeziehung der Richtungsabhängigkeit ermittelt werden können. Bei einem S-förmigen Muster der Schleifriefen, deren Vorzugsrichtung der Rauheit sich abhängig vom Radius ändert, ist es notwendig, abhängig vom Radius der Messposition den Rotationswinkel des optischen Sensors um seine Messachse genau festzulegen. Daher wird bei der Erfindung in einer Einrichtungs-Betriebsart der optische Sensor an einer vorbestimmten Messposition um seine Messachse gedreht und es wird eine Anfangs-Drehposition mit zugehörigem Anfangs-Drehwinkel ermittelt, in der ein Intensitäts-Kennwert maximal ist. Dieser Intensitäts-Kennwert wird aus Signalen der Fotodetektoren des Zeilensensors ermittelt.

Typischerweise ist dieser Intensitäts-Kennwert dann maximal, wenn die Längsachse des Zeilensensors mit der Richtung der Querrauheit übereinstimmt. Wenn nämlich die Längsachse des Zeilensensors mit der Richtung der Querrauheit übereinstimmt, so fällt ein Großteil auch der gestreut reflektierten Intensität auf den Zeilensensor und ein Intensitäts-Kennwert ist maximal. Wenn z.B. die Richtung der Schleifriefen zu dieser Längsachse um 45° verdreht ist, so ist auch die Streuindikatrix der reflektierten gestreuten Strahlung um 45° gegenüber dieser Längsachse des Zeilensensors verdreht und ein Teil der reflektierten Strahlungsintensität trifft nicht auf die Fotodetektoren des Zeilensensors auf, was sich in einem verringerten Intensitäts-Kennwert niederschlägt.

Nachdem in der Einrichtungs-Betriebsart der Anfangs-Drehwinkel ermittelt ist, wird in einer Mess-Betriebsart ausgehend von diesem Anfangs-Drehwinkel aus den detektierten Intensitäten der Fotodetektoren Kennwerte für die Struktur der Oberfläche als auch Formmerkmale wie z.B. Verwölbung, Welligkeit, Rattermarken, etc. ermittelt. Als Kenngröße zur Beurteilung der Beschaffenheit einer Oberfläche kann z.B. die Varianz der Streuwinkelverteilung Aq als Maß für die Mikrostruktur der Oberfläche verwendet werden. Zur Ermittlung der Welligkeit der Oberfläche des Werkstücks wird der weiter oben genannte Kennwert M berechnet und seine Schwankung abhängig vom Drehwinkel berechnet, mit dem das Werkstück in der Drehvorrichtung verdreht wird. Weitere Kenngrößen sind in der genannten VDA 2009 beschrieben.

Die Ermittlung des Anfangs-Drehwinkels kann beispielsweise an einer Messposition am Rande des Werkstücks erfolgen, wobei der optische Sensor so weit um seine Messachse gedreht wird, bis der Intensitäts-Kennwert maximal ist. Danach wird das Werkstück, beispielsweise ein Wafer, gedreht, und der optische Sensor tastet fortlaufend auf einer umlaufenden Kreisbahn seine Oberfläche ab und es werden Kennwerte zur Oberflächenbeschaffenheit und deren Verläufe ermittelt. An verschiedenen Radien des Werkstücks kann in der Einrichtungs-Betriebsart jeweils der Anfangs-Drehwinkel abhängig vom Radius ermittelt werden, so dass eine funktionelle Zuordnung von Anfangs-Drehwinkeln zu verschiedenen Radiuswerten ermittelt werden kann. Beim Abtasten der Oberfläche des Werkstücks in der Mess-Betriebsart wird dann abhängig von der radialen Messposition der zugehörige Anfangs-Drehwinkel eingestellt.

Die Erfindung kann auf unterschiedlich bearbeitete Werkstücke angewendet werden. Bevorzugt wird die Erfindung auf Wafer angewandt, die mittels Schleifen oder Polieren feinbearbeitet sind.

Bei einer Weiterbildung des Verfahrens wird für den Sensor ein Drehwinkel eingestellt, der sich aus dem Anfangs-Drehwinkel plus einem Korrekturwinkel ergibt. Vorzugsweise beträgt der Korrekturwinkel $\pm$ 90° oder $\pm$ 45°. Da Querrauheit und Längsrauheit einen Richtungsunterschied von 90° haben, kann bei einer Verdrehung um $\pm$ 90° einmal die Querrauheit bzw. die Längsrauheit und zugehörige Kennwerte, wie beispielsweise Welligkeit oder Formabweichung ermittelt werden. Beim Korrekturwinkel von $\pm$ 45° werden Zwischenwerte zwischen Längsrauheit und Querrauheit ermittelt.

Bei einer Weiterbildung des Verfahrens wird in der Einrichtungs-Betriebsart als Intensitäts-Kennwert die Summe Ig der Intensitäten aller Fotodetektoren des Zeilensensors ermittelt. Dieser Wert Ig wird auch bei der Berechnung der Kennwerte zur Oberflächenbeschaffenheit nach VDA 2009 notwendigerweise ermittelt, so dass dieser Intensitäts-Kennwert bereits vorliegt und auf einfache Weise eine weitere Verwendung findet. Als Intensitäts-Kennwert kann auch die Summe der Intensitäten einer kleineren Anzahl an Fotodetektoren verwendet werden, wodurch die Summenberechnung beschleunigt wird.

Gemäß einem weiteren Aspekt der Erfindung wird eine Einrichtung gemäß Anspruch 9 zur berührungslosen Beurteilung der Oberflächenbeschaffenheit eines scheibenförmigen, feinbearbeiteten Werkstücks angegeben, mit dem das beschriebene Verfahren ausgeführt werden kann. Die mit dieser Einrichtung erzielbaren Vorteile stimmen mit denen des zuvor beschriebenen Verfahrens überein.

Ausführungsbeispiele der Erfindung werden nachfolgend anhand der Figuren erläutert. Darin zeigt:

Figur 1    schematisch das Streulichtmessprinzip zur Messung von Querrauheit,

Figur 2a, b    das Prinzip des Rückseiten-Schleifens und Polierens an Wafern,

Figur 3    Schleifriefen auf der Waferoberfläche,

Figur 4    Änderung der Streulichtverteilung bei Richtungsänderung der Schleifriefen,

Figur 5    schematische Bestimmung eines Anfangs-Drehwinkels,

Figur 6    Abtastprinzip für die Oberfläche des Wafer,

Figur 7    verschiedene Abtaststrategien,

Figur 8    flächenhafte Darstellung von Messergebnissen an Wafern,

Figur 9    Ergebnisse von Welligkeitsmessungen an einer CMP bearbeiteten Waferoberfläche,

Figur 10    Messergebnisse Aq als Funktion von Radius r, und

Figur 11    eine Einrichtung in Blockdarstellung.

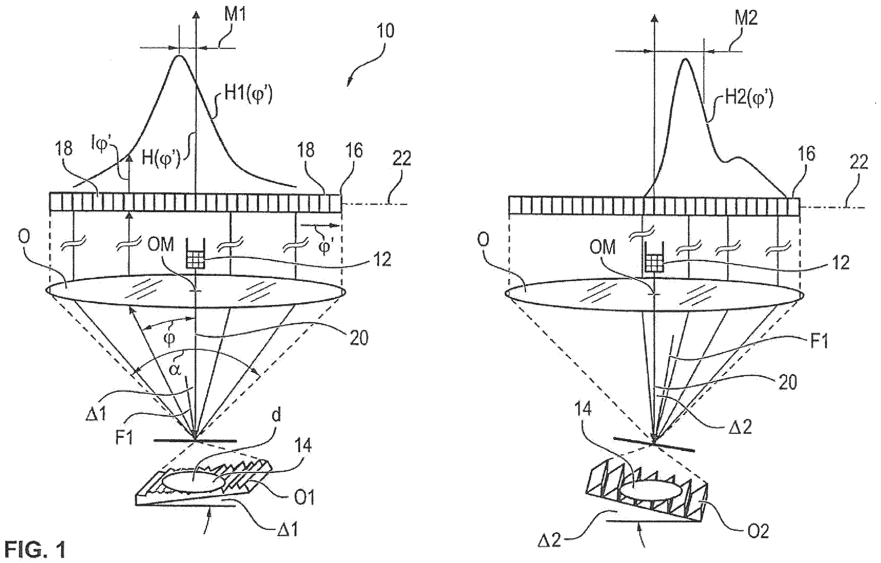

Figur 1 zeigt schematisch das Messprinzip, wie dies beispielsweise auch in der weiter oben erwähnten Richtlinie VDA 2009 beschrieben ist. Ein optischer Sensor 10 für die winkelaufgelöste Streulichtmessung umfasst als Lichtquelle 12 eine LED oder einen Halbleiterlaser, der die Oberfläche O1 einer Probe mit einem Strahlenbündel definierter Geometrie und Intensitätsverteilung beleuchtet. Das Strahlenbündel erzeugt auf der Oberfläche einen Messfleck 14, der in etwa kreisrund mit Durchmesser d ist. Das von der Mikrostruktur der Oberfläche O1 rückgestreute Licht wird innerhalb des maximalen messbaren Streuwinkelbereichs $\alpha$ von einem Messobjektiv O erfasst. Ein Zeilensensor 16 umfassend eine diskrete Anzahl von Fotodetektoren 18 (nur zwei Fotodetektoren sind bezeichnet) ist so angeordnet, dass die einzelnen Fotodetektoren 18 zu den diskreten Streuwinkelwerten $\varphi$ die entsprechenden Intensitätswerte $I\varphi'$ in elektrische Signale wandeln, die als Digitalwerte in einer computergestützten Steuerung (nicht dargestellt) weiterverarbeitet werden.

Das Messobjektiv O ist als Fourier-Optik oder f-Theta-Optik ausgebildet und transformiert die Streuwinkel $\varphi$ in einen Weg $\varphi'$, der der Position i der einzelnen Fotodetektoren 18 entlang des Zeilensensors 16 entspricht. Somit erhält man entlang der Anordnung der Fotodetektoren 18 mit Intensitäten $I\varphi'$ eine Verteilung $H1(\varphi')$. Aus dieser Intensitätsverteilung $H1(\varphi')$ kann durch Normierung die Streuwinkelverteilung $H(\varphi')$ der Mikrostruktur im Messfleck 14 berechnet werden.

Die Ausrichtung des Sensors 10 mit seiner Messachse 20 ist generell senkrecht zu der zu messenden Oberfläche O1. In diesem Falle stimmen die Flächennormale F1 der Oberfläche O1 und die Messachse 20 überein. Diese Messachse 20 stimmt wiederum mit einer Mittelachse oder Längsachse des Sensors 10 überein.

Wenn die Flächennormale F1 um einen Winkel ∆1 gegenüber der Messachse 20 in Richtung der Längsachse 22 des Zeilensensors 16 verkippt ist, so verschiebt sich die Intensitätsverteilung H1($\varphi$') um einen Wert M1 gegenüber der mittleren Lage der Intensitätsverteilung. Diese Verschiebung M1 kann genützt werden, um beispielsweise Formabweichungen, Welligkeiten oder Unrundheiten der Oberfläche O1 zu bestimmen. Der Wert M1 entspricht dem ersten statistischen Moment der Streuwinkel-Verteilungskurve H1($\varphi$') mit $\varphi$' = tan($\varphi$) und damit dem Schwerpunkt dieser Verteilungskurve H1($\varphi$').

Als erstes statistisches Moment einer Verteilungskurve H($\varphi$') berechnet sich M allgemein zu

$$M = \Sigma \varphi' \cdot H(\varphi')$$

mit

$$H(\varphi') = I(\varphi')/\Sigma I(\varphi').$$

Bezogen auf die diskreten Fotodetektoren i berechnet sich M zu

$$M = \sum_{i=1}^{n}(\varphi' i) \cdot I_i / \sum_{i=1}^{n} I_i,$$

worin

    i die Laufvariable von 1 bis n,
    n die maximale Anzahl von Fotodetektoren,
    Ii die gemessene Intensität des Fotodetektors i und
    $\varphi$'i der dem Fotodetektor i zugeordnete Streuwinkel ist.

Die Bezeichnung $\sum_{i=1}^{n} I_i$ kennzeichnet die Gesamtintensität Ig, die auf die Fotodetektoren 18 des Zeilendetektors fällt. Diese Gesamtintensität Ig, die als Nebenprodukt bei der Berechnung von M auftritt, wird als Intensitäts-Kennwert in der Einrichtungs-Betriebsart verwendet, wie weiter unten näher erläutert wird.

Bei der Berechnung von M wird eine Normierung durchgeführt, was bedeutet, dass der Kennwert M unabhängig vom Reflexionsvermögen der Oberfläche des Werkstücks ist. Anhand des Kennwerts M kann auch eine Feinjustierung des Sensors in Bezug auf eine Flächennormale der zu messenden Fläche erfolgen.

Im linken Bildteil der Figur 1 hat die Oberfläche O1 ein stochastisches Schleifprofil. Im Bildteil rechts hat eine weitere Oberfläche O2 ein asymmetrisches Rauheitsprofil. Entsprechend ergibt sich ein Verlauf der Intensitätsverteilung H2($\varphi$') und infolge eines Verkippwinkels ∆2 der Flächennormale F1 der Oberfläche O2 gegenüber der Messachse 20 in Richtung der Längsachse 22 des Zeilensensors 16 eine Verschiebung der Streulichtverteilung H2($\varphi$') um M2.

Typische Werte für den Sensor 10 sind für den Durchmesser d des Messflecks 14 etwa 0,03 bis 0,9 mm. Der Öffnungswinkel $\alpha$ des Objektivs O ist zum Beispiel 32°. Eine entsprechende Anzahl von Fotodetektoren 18 ist so gewählt, dass sich eine Auflösung für $\varphi$' von 1° ergibt. Die Anzahl der Messung und Berechnung von Kennwerten ist größer als 1000/Sekunde.

Beim winkelaufgelösten Streulichtverfahren ist ein Vorteil die Unempfindlichkeit gegenüber Abstandsänderungen, die an ebenen Flächen bis zu 2 mm betragen kann.

Ein optischer Mittelpunkt OM des Sensors 10 liegt auf der Messachse 20 im Bereich der Mitte des Objektivs O. Um den Sensor 10 in Normalenrichtung zur Fläche O1, O2 auszurichten, wird er um den Mittelpunkt OM geschwenkt, bis der Kennwert M annähernd 0 oder minimal ist. Aus der Intensitätsverteilung H1($\varphi$') kann eine Vielzahl von Kenngrößen ermittelt werden (siehe hierzu VDA 2009), so z.B. die Varianz der Streuwinkelverteilung Aq als Maß für die Mikrostruktur der Oberfläche, den Kennwert Aq* als Defekterkennungssignal, z.B. für Mikrorisse, die Schiefe der Streuwinkelverteilung Ask als Maß für die Profilschiefe der Mikrostruktur und zahlreiche weitere Einzelkenngrößen und Mehrfachkenngrößen.

Figur 2a zeigt einen wichtigen Anwendungsfall, bei dem das Werkstück ein Wafer W ist, dessen Rückseite durch Schleifen gedünnt wird. Der Wafer W ist in einer numerischen Bearbeitungsmaschine (nicht dargestellt) auf einem Drehtisch DT zentrisch zur Mittelachse m1 angeordnet und rotiert bei seiner Bearbeitung in Pfeilrichtung P1. Eine mit Druck D beaufschlagte Schleifscheibe S, die mit ihrer Mittelachse m2 um die Mittelachse m1 des Drehtischs DT gekippt ist, rotiert in Pfeilrichtung P2 und trägt auf der Rückseite des Wafers W spanend Material ab. Aufgrund der gegenseitigen Rotation von Wafer W und Schleifscheibe S bilden sich auf der Oberfläche des Wafers W S-förmige Schleifriefen aus, die teilweise noch mit dem bloßen Auge zu erkennen sind. Der Materialabtrag soll so erfolgen, dass die Schleifkräfte möglichst homogen auf der Oberfläche des Wafers W verteilt werden, und die sich durch den Schleifprozess ergebende Oberflächenrauheit und Oberflächenverformung soll möglichst klein sein, damit die Funktion der im Wafer W vorhandenen ICs nicht beeinträchtigt wird.

Figur 2b zeigt wie bereits erwähnt den CMP-Herstellungsprozess, der eine weitere Einebnung der Schleifstruktur bewirkt. Aufgrund der Relativbewegung von Wafer W und Polierscheibe PS überlagert sich ein Poliermuster zum Schleifmuster, was die Nanotopographie der Oberfläche weiter verkompliziert.

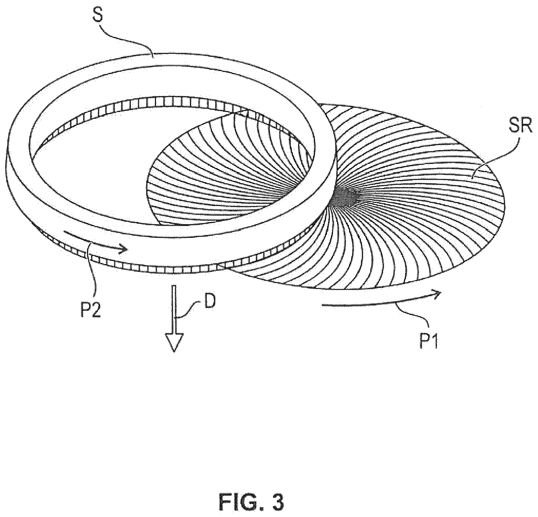

Figur 3 zeigt in einer weiteren Prinzipdarstellung die Oberfläche des Wafers W mit S-förmigen Schleifriefen SR. Bei exakt eingehaltener Rotation in Richtung P1 und P2 ist der Verlauf der Schleifriefen als analytische Funktion eindeutig definiert, und aus den Einstellparametern für die numerische Bearbeitungsmaschine bekannt.

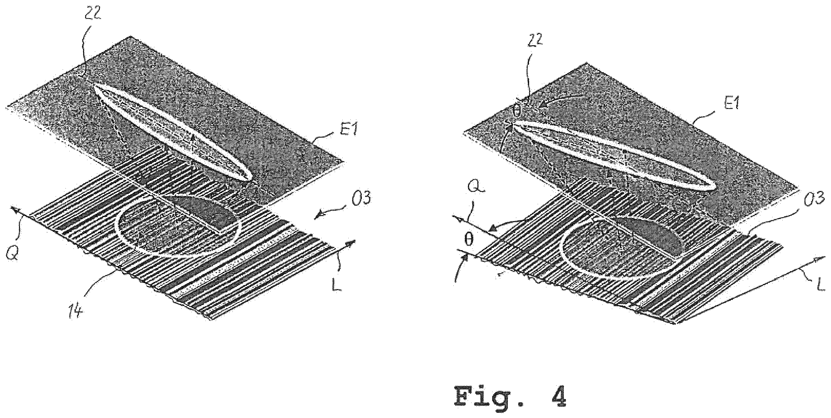

Figur 4 zeigt schematisch das Messprinzip an einem Oberflächenabschnitt für eine Oberfläche O3 mit in Längsrichtung L gerade verlaufenden Schleifrillen. Rechtwinklig hierzu ist in Querrichtung Q die Querrauheit definiert. Vom beleuchteten Messfleck 14 geht die zurückreflektierte Intensität der Strahlung aus und trifft in der Ebene E1 (bzw. in der Fourier-Ebene des Messobjektivs O) auf den Zeilensensor 16, der aus Gründen der besseren Übersicht weggelassen wurde. Die Streulichtverteilung, in der die Verteilung H1 enthalten ist, hat in dieser Ebene E1 eine elliptische Struktur, wobei die große Halbachse in Querrichtung Q verläuft und die kleine Halbachse in Längsrichtung L. Stimmt die Längsachse 22 des Zeilensensors 16 mit der großen Halbachse der Streulichtverteilung überein, so wird im Wesentlichen das Streulicht, das von der Querrauheit herrührt, erfasst. Im rechten Bildteil ist der Oberflächenabschnitt O3 um einen horizontalen Winkel θ gegen den Uhrzeigersinn verdreht, was dazu führt, dass bei etwa senkrecht stehender Messachse 20 des optischen Sensors 10 sich in der Ebene E1 auch die Streulichtverteilung um diesen Winkel θ verdreht. Entlang der Längsachse 22 des Zeilensensors 16 wird nun nicht mehr die zur Querrauheit gehörende gesamte Streulichtverteilung erfasst, sondern nur ein Teil davon. Dies bedeutet wiederum, dass die aus den gemessenen Intensitäten der Fotodetektoren 18 berechneten Kennwerte keinen eindeutigen Bezug zur Oberflächenstruktur haben und mit Messfehlern behaftet sind. In der praktischen Anwendung der winkelaufgelösten Streulichtmesstechnik sind die Kennwerte für Rauheit, Formabweichung, Welligkeit, etc. normalerweise auf die Querrauheit oder die Längsrauheit bezogen.

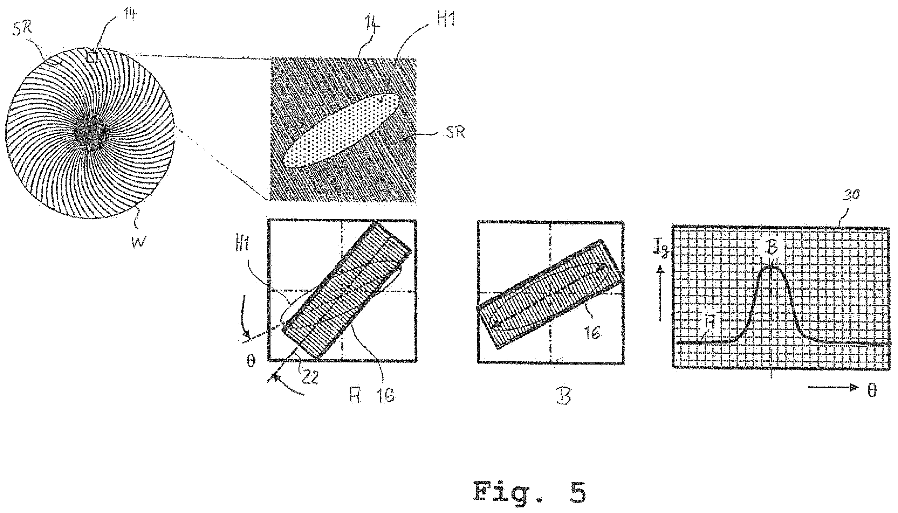

Figur 5 zeigt in einer prinzipiellen Darstellung das bei der Einrichtungs-Betriebsart angewendete Verfahren zur Bestimmung eines Anfangs-Drehwinkels für den optischen Sensor 10. Im Bildteil links oben ist die Draufsicht auf die Oberfläche des Wafers W mit S-förmiger Schleifstruktur SR dargestellt. Der optische Sensor 10 ist mit seiner Messachse 20 senkrecht zur Oberfläche des Wafers W an einer vorbestimmten Messposition des Wafers W ausgerichtet. Die vom Messfleck 14 ausgehende Streulichtverteilung H1 ist in Bezug zu den Schleifriefen SR in einem vergrößerten Ausschnitt dargestellt. Wie zu erkennen ist, verlaufen die großen Halbachsen der Streulichtellipse quer zur Richtung der Schleifrillen.

In den unteren Bildabschnitten A und B sind zwei Zustände dargestellt. Im Zustand A ist der optische Sensor 10 mit seinem Zeilensensor 16 so verdreht, dass die Längsachse 22 des Zeilensensors 16 nicht mit den großen Halbachsen der elliptischen Streulichtverteilung H1 übereinstimmt. Um eine Übereinstimmung herzustellen, ist der Zeilensensor 16 mit seiner Längsachse 22 um einen horizontalen Winkel θ um die Messachse 20 zu verdrehen. Im Zustand B ist das der Fall und die Intensitätsverteilung H1 wird vollständig von den Fotodetektoren des Zeilensensors 16 erfasst.

Im rechten Bildteil ist ein Diagramm 30 dargestellt, in welchem der Intensitäts-Kennwert Ig als Summe der Intensitäten aller Fotodetektoren 18 über den Drehwinkel θ aufgetragen ist. Im Zustand B, in welchem die große Halbachse der elliptischen Intensitätsverteilung H1 mit der Längsachse 22 des Zeilendetektors 16 zusammenfällt, ist der Intensitäts-Kennwert Ig maximal. Der dazugehörige Anfangs-Drehwinkel θ definiert die Anfangs-Drehposition für den optischen Sensor 10 in der vorbestimmten Messposition. In radialer Richtung der Oberfläche des Wafers W variiert der Anfangs-Drehwinkel θ wegen der S-Form der Schleifriefen.

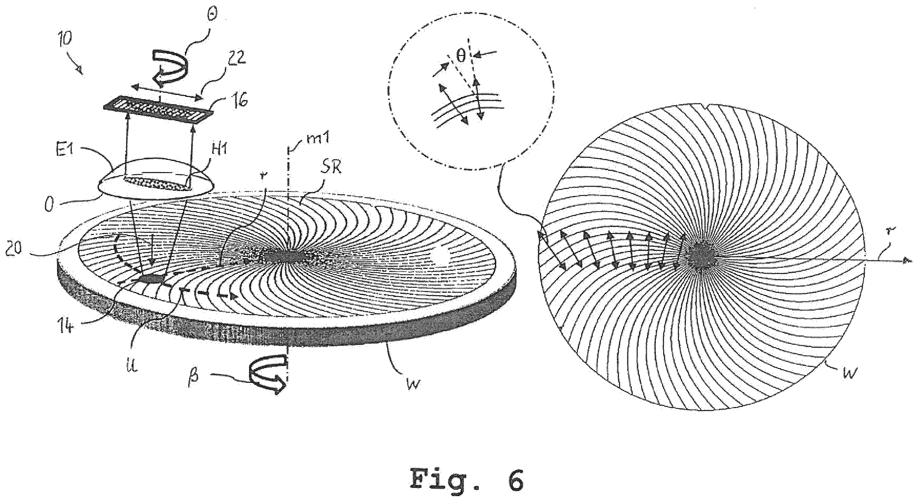

Figur 6 zeigt in einer Darstellung das Abtasten der Oberfläche des Wafers W. Der Sensor 10 ist mit seiner Messachse 20 an einer Messposition des Wafers W senkrecht zur Oberfläche ausgerichtet und beleuchtet den Messfleck 14. Die rückgestreute Strahlung führt in der Ebene E1 zur Intensitätsverteilung H1. In Folge der fourieroptischen Abbildung mit Messobjektiv O wird die Intensitätsverteilung H1 in die Ebene des Zeilensensors 16 transformiert. Durch Verdrehen des Sensors 10 um seine Messachse 20 wird der Anfangs-Drehwinkel θ ermittelt, in welchem der Intensitäts-Kennwert Ig maximal ist. In der darauf folgenden Mess-Betriebsart erfolgt dann die Abtastung der Oberfläche des Wafers W, wobei der Wafer W um den Drehwinkel β um seine Achse m1 verdreht wird. Bei jeder vollen Umdrehung des Wafers W wird der Sensor 10 um einen kleinen Schritt in radialer Richtung r zur Achse m1 bewegt. Im Allgemeinen ist die S-Form der Schleifriefen aus den Parametern des Rückseiten-Schleifens bekannt und es liegt hierzu eine analytische Funktion F (r, θ) vor. Mit jedem Schritt wird der Sensor 10 aufgrund der bekannten Änderung der Riefenrichtung der S-förmigen Schleifriefen SR so gedreht, dass die Intensitätsverteilung H1 mit ihrer großen Halbachse immer voll auf den Zeilensensor 16 auftrifft. Auf diese Weise kann die gesamte Oberfläche des Wafers W abgetastet werden. Im rechten Bildteil der Figur 6 ist für verschiedene Radiuswerte r anhand der Doppelpfeile erkennbar, wie die Längsachse 22 des Zeilensensors 16 auszurichten ist, um die Intensitätsverteilung H1 zu erfassen.

Bei unbekannter Änderung der Schleifrichtung bzw. der Polierrichtung, d.h. die exakte S-Form der Schleifriefen SR ist nicht bekannt, kann an einer beliebigen Messposition auf der Oberfläche des Wafers W für den zugehörigen Radiuswert r ein zugehöriger Anfangs-Drehwinkel θ ermittelt werden. Dieser Anfangs-Drehwinkel θ gilt dann für eine bestimmte Kreisbahn. Für andere Radiuswerte r ist dieser Vorgang zu wiederholen, oder es kann eine Überprüfung des richtigen Anfangs-Drehwinkels θ erfolgen. Diese Vorgänge laufen üblicherweise automatisiert ab. Es können auch in einer Vorlaufphase an verschiedenen Stellen der Oberfläche zu Radiuswerten entsprechende Anfangs-Drehwinkel und eine Funktion F (r, θ) durch Interpolation ermittelt werden. Auf diese Funktion F (r, θ) kann dann in der Mess-Betriebsart zurückgegriffen werden, um einen Abschnitt oder die gesamte Oberfläche abzutasten.

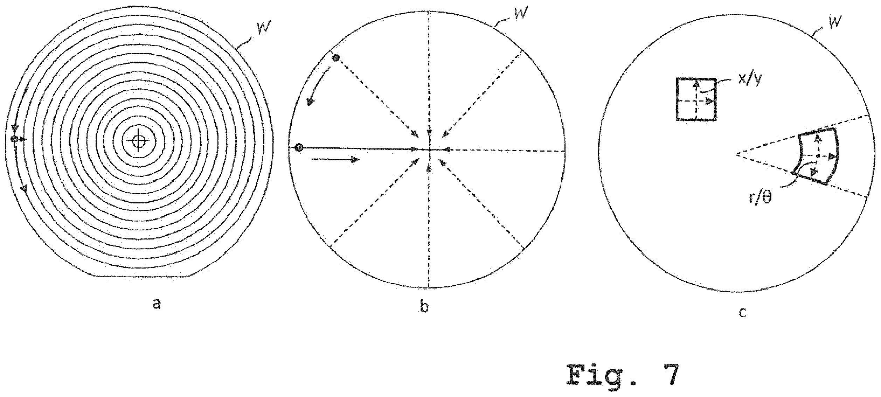

Figur 7 zeigt unterschiedliche Strategien bei der Abtastung der Oberfläche des Wafers W. Die Abtastung kann gemäß Darstellung a kreisförmig ausgehend von einer bestimmten Messposition erfolgen. In der Darstellung b kann die Abtastung sternförmig gemäß den gezeigten Richtungspfeilen erfolgen. In der Darstellung c kann eine Abtastung in Form eines Kreisabschnitts erfolgen. Falls gewünscht, ist auch eine Abtastung eines Abschnitts mit kartesischen Koordinaten x, y möglich.

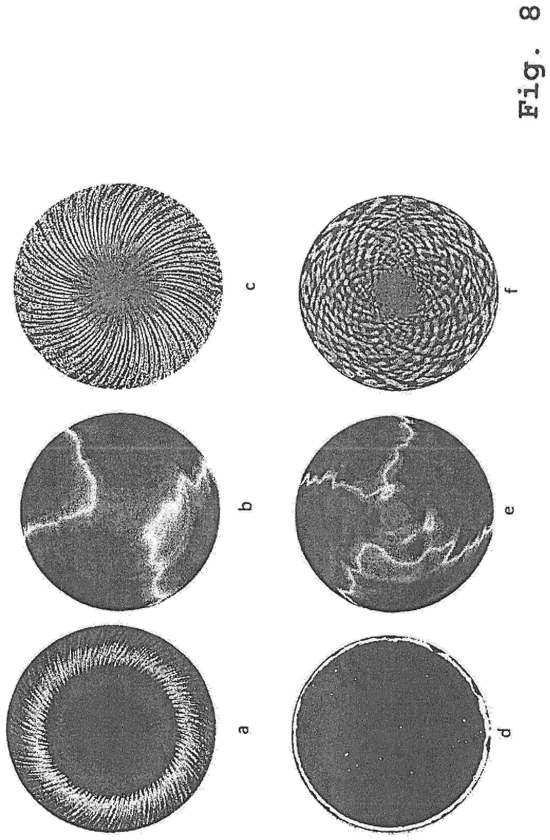

In Figur 8 ist eine Darstellung von Messergebnissen an zwei Wafern W mit jeweils 300 mm Durchmesser gezeigt. Der Wafer in den Darstellungen a - c wurde geschliffen und der Wafer in den Darstellungen d - f zusätzlich poliert. Die Abtastung erfolgte jeweils kreisförmig. In der Darstellung a und d sind über die gesamte Oberfläche gemessene Aq-Werte dargestellt. Helle Flächen zeigen hohe Aq-Werte, gleichbedeutend mit vergrößerter Rauheit. Dunkle Flächen kennzeichnen niedrige Aq-Werte. Zu erkennen ist, dass im Randbereich des Wafers in Darstellung a die Aq-Werte größer als im mittleren und zentralen Bereich sind. Die Mittenrauwerte Ra schwanken in der Darstellung a zwischen 10 - 6 nm. In der Darstellung d (polierter Wafer) zwischen 0,6 - 1,2 nm. In den Darstellungen b und e sind Formabweichungen im Makrobereich (Verwölbung) über die gesamte Oberfläche des Wafers W dargestellt. Auch hier bedeuten helle Flächen große Verwölbungswerte bzw. dunkle Flächen niedrige Verwölbungswerte. Die Ebenheit bzw. die Verwölbung liegt in der Darstellung b über die gesamte Fläche gesehen im Bereich von -60 bis +60 μm (peak to valley) und in der Darstellung e im Bereich -10 bis +10 μm. In den Darstellungen c und f ist die über die gesamte Oberfläche gemessene Welligkeit der Oberfläche als Graustufung dargestellt. Sie liegt in der Darstellung c im Bereich von -50 bis +50 nm und in der Darstellung f im Bereich von -5 bis +5 nm. Die Verbesserung der Oberfläche durch das CMP Verfahren ist deutlich zu erkennen (Grauwertskala wurde angepasst) Die Rauheitswerte Ra basieren auf einer Vergleichsmessung mit einem Konfokalmessmikroskop, das bei 1 nm bereits an seiner unteren Toleranzgrenze arbeitet. Auch die Form und Welligkeit wurden durch den CMP Prozess noch weiter verbessert. Die gemessenen Welligkeitsamplituden liegen beim CMP Prozess unter 10 nm.

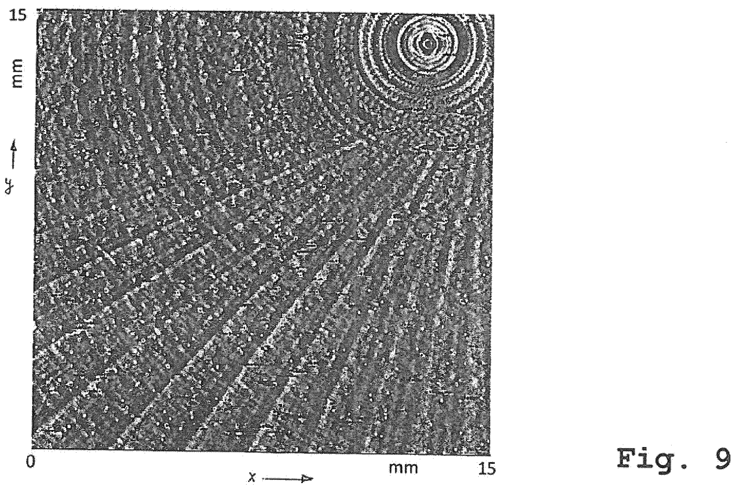

Figur 9 zeigt Ergebnisse von Welligkeitsmessungen an einer CMP bearbeiteten Waferoberfläche, die mit einem kleinen Messfleckdurchmesser von 30 μm um bei einer Abtastung mit einem x/y- Scantisch gewonnen wurden. Die zu erkennenden strahlenförmigen Strukturen sind Reste von der vorausgegangenen Schleifbearbeitung und die kreisförmigen Strukturen sind Texturen von der CMP Bearbeitung. Die Amplituden liegen unter 10 nm.

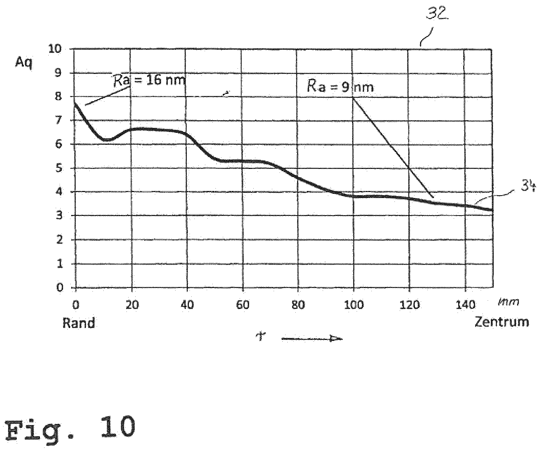

Figur 10 zeigt in einem Diagramm 32 den Verlauf der Rauheit Aq eines geschliffenen Wafers vom Waferrand (r = 0) zum Waferzentrum (r = 140 mm). In der Kennlinie 34 wird beispielhaft auf die mit einem Konfokal-Mikroskop gemessenen arithmetischen Mittenrauwerte Ra hingewiesen; sie betragen am Rand 16 nm und nahe dem Zentrum 9 nm.

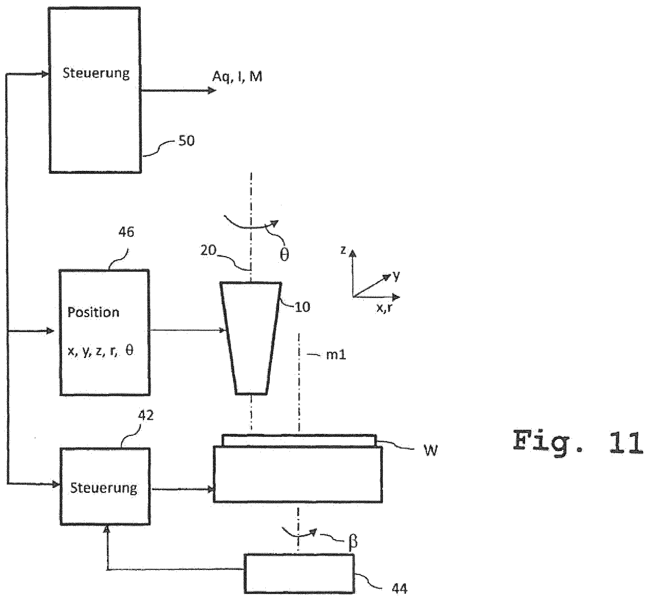

Figur 11 zeigt in einer Blockdarstellung Funktionseinheiten einer Einrichtung zum Durchführen des beschriebenen Verfahrens. Der Wafer W ist auf einem Drehtisch 40 zentrisch angeordnet und wird von einer Drehtisch-Steuerung 42 um einen Drehwinkel β verdreht, wobei dieser Drehwinkel β von einem Drehwinkelsensor 44 erfasst wird. Eine Positioniervorrichtung 46 positioniert den optischen Sensor 10 vorzugsweise in x, y, z-Richtung, so dass seine Messachse 20, die mit der Mittelachse bzw. der Längsachse des Sensors 10 übereinstimmt, senkrecht auf der Oberfläche des Wafers W an einer vorbestimmten Messposition steht. Typischerweise verläuft die x-Achse zu radialer Richtung des Drehtischs 40, so dass x-Werte Radiuswerten r des Wafers entsprechen. Die Positioniervorrichtung 46 lagert den Sensor 10 drehbar um seine Messachse 20, wodurch ein horizontaler Drehwinkel θ einstellbar ist. Vorzugsweise umfasst der Drehtisch 40 eine Vakuum-Aufspannvorrichtung (nicht dargestellt), die an eine Vakuumpumpe angeschlossen ist und die den Wafer W hält. Auf diese Weise ist ein schnelles Aufspannen und Wechseln eines Wafers W möglich.

Eine computergestützte Steuerung 50 steuert die Positioniervorrichtung 46 sowie den Drehtisch 40, deren verschiedenen Stellachsen β, x, y, z, θ motorisch verstellt werden. Die Steuerung 50 ist auch mit dem Sensor 10 verbunden und wertet deren Signale aus. Die Steuerung 50 berechnet aus diesen Signalen die verschiedenen Kennwerte nach VDA 2009 und deren Verläufe über den Drehwinkel β und Radius r Die Einrichtung eignet sich zur automatischen Oberflächenprüfung im Labor und in der Produktion von Wafern. Mit der momentan vorhandenen Technologie können pro Sekunde bis zu 10 000 Streulichtverteilungen mittels des Zeilensensors erfasst und die zugehörigen Kennwerte Ig, Aq und M für Rauheit, Ebenheit und Welligkeit berechnet werden. Höhere Abtastraten sind in der Zukunft zu erwarten. Um an einem Wafer 100 000 Messpositionen abzutasten, benötigt man also nur 10 s, wodurch eine umfassende flächenhafte Prüfung des Wafers auf Vorderseite und/oder Rückseite ermöglicht wird. Dies ist ein wesentlicher Vorteil des hier beschriebenen Verfahrens. Hinzu kommt die extrem hohe laterale und vertikale Ortsauflösung bis in den Subnanometerbereich.

Bezugszeichenliste

| 10 | Sensor |
|---|---|
| 12 | Lichtquelle |
| 14 | Messfleck |
| d | Durchmesser des Messflecks |
| O1 | Oberfläche |
| α | maximal messbarer Streuwinkelbereich |

| O | Messobjektiv |
| 16 | Zeilensensor |
| 18 | Fotodetektoren |
| φ | Streuwinkelwerte |
| Iφ' | Intensitätswerte |
| H1(φ') | Intensitätsverteilung |
| H(φ') | Streuwinkelverteilung |
| F1 | Flächennormale |
| 20 | Messachse |
| Δ1 | Winkel |
| 22 | Längsachse des Zeilensensors |
| M1 | Verschiebung gegenüber der mittleren Lage der Intensitätsverteilung |
| O2 | Oberfläche |
| H2(φ') | Intensitätsverteilung |
| Δ2 | Verkippwinkel |
| M2 | Verschiebung |
| Aq | Varianz der Streuwinkelverteilung; Rauheitswert |
| Ask | Profilschiefe der Mikrostruktur |
| Aq* | Defekterkennungssignal |
| i | Laufvariable |
| Ii | gemessene Intensität des Fotodetektors i |
| Ig | Gesamtintensität, Intensitäts-Kennwert |
| OM | Optischer Mittelpunkt des Sensors |
| W | Wafer |
| DT | Drehtisch |
| m1 | Mittelachse des Wafers |
| P1, P2 | Pfeilrichtungen |
| D | Druck |
| S | Schleifscheibe |
| m2 | Mittelachse der Schleifscheibe |
| RE | Rotationseinheit |
| PS | Polierscheibe |
| E | Emulsion |
| Ra | Mittenrauwert |
| SR | Schleifriefen |
| L | Längsrichtung |
| Q | Querrichtung |
| E1 | Ebene |
| θ | horizontaler Drehwinkel |
| r | Radius |
| 30 | Diagramm |
| 32 | Diagramm für den Aq-Wert |
| 40 | Drehtisch |
| 42 | Drehtisch-Steuerung |
| β | Drehwinkel |
| 44 | Drehwinkel-Sensor |
| 46 | Positioniervorrichtung |
| 50 | Steuerung |

**Patentansprüche**

1. Verfahren zur berührungslosen Beurteilung der Oberflächenbeschaffenheit eines scheibenförmigen, feinbearbeiteten Werkstücks (W), insbesondere eines Wafers (W), nach der winkelaufgelösten Streulichtmesstechnik, bei dem ein optischer Sensor (10) ein Strahlenbündel (24) mit definierter Intensitätsverteilung auf die zu beurteilende Oberfläche des Werkstücks (W) aussendet und einen Messfleck (14) beleuchtet, die zurückreflektierte Intensität (I$_i$) der Strahlung mittels eines Zeilensensors (16) mit einer diskreten Anzahl (i) von Fotodetektoren (18) in einem definierten Winkelbereich (α) detektiert und daraus mindestens ein Intensitäts-Kennwert (Ig) ermittelt wird, das Werkstück (W) in einer Drehvorrichtung (40) drehbar gelagert und der Drehwinkel (β) erfasst wird, der Sensor (10) in einer Positioniervorrichtung relativ zur Oberfläche des Werkstücks (W) so ausgerichtet wird, dass seine Messachse (20) senkrecht auf der Oberfläche steht, wobei die Positioniervorrichtung (46) den Sensor (10) in radialer Richtung (r) relativ zur Oberfläche des Werkstücks (W) verschiebbar und um seine Messachse (20) um einen Winkel (θ) drehbar lagert, in einer Einrichtungs-Betriebsart der Sensor (10) an einer vorbestimmten Messposition um seine Messachse (20) gedreht wird und eine Anfangs-Drehposition mit zugehörigem Anfangs-Drehwinkel (θ) ermittelt wird, in der der Intensitäts-Kennwert (Ig) maximal ist, wobei als Intensitäts-Kennwert (Ig) die Summe der Intensitäten mehrerer Fotodetektoren (18) des Zeilensensors (16) ermittelt wird, und bei dem danach in einer Mess-Betriebsart eine Steuerung (50) unter Berücksichtigung dieses in der Einrichtungs-Betriebsart ermittelten Anfangs-Drehwinkels (θ) aus der detektierten Intensität (I$_i$) der Fotodetektoren (18) mindestens einen Kennwert (Aq; Aq*; M) zur Oberflächenbeschaffenheit berechnet, wobei zumindest ein Abschnitt der Oberfläche des Werkstücks flächenhaft abgetastet und abhängig vom Radius (r) der Messposition auf dem Werkstück der Drehwinkel (θ) um die Messachse (20) des Sensors (10) verändert wird.

2. Verfahren nach Anspruch 1, **dadurch gekennzeichnet, dass** in der Mess-Betriebsart die Steuerung (50) weitere Kennwerte (Aq; Aq*; M) zur Oberflächenbeschaffenheit ermittelt, bei dem ein Drehwinkel (θ) eingestellt wird, der sich aus dem Anfangs-Drehwinkel plus einem Korrekturwinkel ergibt.

3. Verfahren nach Anspruch 2, **dadurch gekennzeichnet, dass** der Korrekturwinkel ±45° oder ±90° ist.

4. Verfahren nach einem der vorhergehenden Ansprüche, bei dem in der Einrichtungs-Betriebsart als Intensitäts-Kennwert (Ig) die Summe der Intensitäten aller Fotodetektoren (18) des Zeilensensors (16) ermittelt wird.

5. Verfahren nach einem der vorhergehenden Ansprüche, bei dem in der Mess-Betriebsart die Drehvorrichtung (40) das Werkstück (W) um einen vorbestimmten Winkel (β) verdreht und der Sensor (10) die Oberfläche des Werkstücks (W) hierbei fortlaufend abtastet und der Verlauf des Kennwerts oder der Kennwerte längs der zugehörigen Kreisbahn ermittelt wird.

6. Verfahren nach einem der vorhergehenden Ansprüche, **dadurch gekennzeichnet, dass** die Veränderung des Drehwinkels (θ) nach einer vorgegebenen Funktion F (r, θ) erfolgt.

7. Verfahren nach einem der vorhergehenden Ansprüche, **dadurch gekennzeichnet, dass** das flächenhafte Abtasten kreisförmig, teilkreisförmig, spiralförmig oder sternförmig erfolgt.

8. Verfahren nach einem der vorhergehenden Ansprüche, **dadurch gekennzeichnet, dass** der beleuchtete Messfleck (14) einen Durchmesser von 20 bis 300 μm umfasst.

9. Einrichtung zur berührungslosen Beurteilung der Oberflächenbeschaffenheit eines scheibenförmigen, feinbearbeiteten Werkstücks (W), insbesondere eines Wafers (W), nach der winkelaufgelösten Streulichtmesstechnik, umfassend einen optischen Sensor (10), der ein Strahlenbündel (24) mit definierter Intensitätsverteilung auf die zu beurteilende Oberfläche des Werkstücks (W) aussendet und einen Messfleck (14) beleuchtet, einen Zeilensensor (16) mit einer diskreten Anzahl (i) von Fotodetektoren (18), der die zurückreflektierte Intensität ($I_i$) der Strahlung in einem definierten Winkelbereich (α) detektiert und daraus mindestens einen Intensitäts-Kennwert (Ig) ermittelt, eine Drehvorrichtung (40), die das Werkstück (W) drehbar lagert, wobei ein Drehwinkelsensor (44) den Drehwinkel (β) erfasst, eine Positioniervorrichtung (46), die den Sensor (10) relativ zur Oberfläche des Werkstücks (W) so ausrichtet, dass seine Messachse (20) senkrecht auf der Oberfläche steht, wobei die Positioniervorrichtung (46) den Sensor (10) in radialer Richtung (r) relativ zur Oberfläche des Werkstücks (W) verschiebbar und um seine Messachse (20) um einen Winkel (θ) drehbar lagert, eine computergestützte Steuerung (50), die die Positioniervorrichtung (46) sowie die Drehvorrichtung (40) steuert und auch mit dem Sensor (10) verbunden ist und deren Signale auswertet, wobei in einer Einrichtungs-Betriebsart die Positioniervorrichtung (46) eingerichtet ist, den Sensor (10) an einer vorbestimmten Messposition um seine Messachse (20) zu drehen und die Steuerung (50) eingerichtet ist, eine Anfangs-Drehposition mit zugehörigem Anfangs-Drehwinkel (θ) zu ermitteln, in der der Intensitäts-Kennwert (Ig) maximal ist, wobei als Intensitäts-Kennwert (Ig) die Summe der Intensitäten mehrerer Fotodetektoren (18) des Zeilensensors (16) ermittelt wird, und wobei danach in einer Mess-Betriebsart die Steuerung (50) eingerichtet ist, unter Berücksichtigung dieses in der Einrichtungs-Betriebsart ermittelten Anfangs-Drehwinkels (θ) aus der detektierten Intensität ($I_i$) der Fotodetektoren (18) mindestens einen Kennwert (Aq; Aq*; M) zur Oberflächenbeschaffenheit zu berechnen, wobei die Steuerung (50) eingerichtet ist, zumindest einen Abschnitt der Oberfläche des Werkstücks flächenhaft abzutasten und abhängig vom Radius (r) der Messposition auf dem Werkstück den Drehwinkel (θ) um die Messachse (20) des Sensors (10) zu verändern.

10. Einrichtung nach Anspruch 9, **dadurch gekennzeichnet, dass** in der Mess-Betriebsart die Steuerung (50) eingerichtet ist, weitere Kennwerte (Aq; Aq*; M) zur Oberflächenbeschaffenheit zu ermitteln, wobei ein Drehwinkel (θ) eingestellt wird, der sich aus dem Anfangs-Drehwinkel plus einem Korrekturwinkel ergibt.

11. Einrichtung nach Anspruch 10, **dadurch gekennzeichnet, dass** der Korrekturwinkel ±45° oder ±90° ist.

12. Einrichtung nach einem der vorhergehenden Ansprüche, bei der in der Mess-Betriebsart die Drehvorrichtung (40) eingerichtet ist, das Werkstück (W) um einen vorbestimmten Winkel (β) zu verdrehen und der Sensor (10) eingerichtet ist, die Oberfläche des Werkstücks (W) hierbei fortlaufend abzutasten und den Verlauf des Kennwerts oder der Kennwerte längs der zugehörigen Kreisbahn zu ermitteln.

13. Einrichtung nach einem der vorhergehenden Ansprüche, **dadurch gekennzeichnet, dass** der beleuchtete Messfleck (14) einen Durchmesser von 20 bis 300 μm aufweist.

## Claims

1. A method for the contactless assessment of the surface quality of a disk-shaped, fine-machined workpiece (W), in particular a wafer (W), according to the angle-resolved scattering light measuring technology, in which an optical sensor (10) emits a beam of rays (24) with defined intensity distribution onto that surface of the workpiece (W) which is to be assessed and illuminates a measuring spot (14), the reflected intensity ($I_i$) of the radiation is detected by means of a line sensor (16) with a discrete number (i) of photodetectors (18) in a defined angular range (α) and at least one characteristic value (Ig) is determined therefrom,

the workpiece (W) is rotatably mounted in a rotary device (40) and the rotation angle ($\beta$) is detected,

the sensor (10) is oriented in a positioning device relative to the surface of the workpiece (W) such that its measuring axis (20) is perpendicular to the surface, wherein the positioning device (46) mounts the sensor (10) movably in radial direction (r) relative to the surface of the workpiece (W) and rotatably about its measuring axis (20) by an angle ($\theta$),

in a set-up mode, the sensor (10) is rotated at a predetermined measuring position about its measuring axis (20) and an initial rotary position with associated initial rotation angle ($\theta$) is determined in which the intensity characteristic value (Ig) is at a maximum, wherein the intensity characteristic value (Ig) is detected as the sum of the intensities of the multiple photodetectors (18) of the line detector (16),

and in which subsequently in a measuring mode, a control (50), taking into account this initial rotation angle ($\theta$) detected in the set-up mode, calculates from the detected intensity ($I_i$) of the photodetectors (18) at least one characteristic value (Aq; Aq*; M) for surface quality, wherein at least one section of the surface of the workpiece is area-scanned, wherein dependent on the radius (r) of the measuring position on the workpiece, the rotation angle ($\theta$) about the measuring axis (20) of the sensor (10) is changed.

2. The method according to claim 1, **characterized in that** in the measuring mode, the control (50) determines further characteristic values (Aq; Aq*; M) for surface quality, in which a rotation angle ($\theta$) is set resulting from the initial rotation angle plus a correction angle.

3. The method according to claim 2, **characterized in that** the correction angle is $\pm45°$ or $\pm90°$.

4. The method according to one of the preceding claims, in which in the set-up mode, the sum of intensities of all photodetectors (18) of the line sensor (16) is determined as intensity characteristic value (Ig).

5. The method according to one of the preceding claims, in which in the measuring mode, the rotary device (40) rotates the workpiece (W) by a predetermined angle ($\beta$) and the sensor (10) scans the surface of the workpiece (W) continuously and the curve of the characteristic value or the characteristic values is determined along the associated circular path.

6. The method according to one of the preceding claims, **characterized in that** the change of the rotation angle ($\theta$) is accomplished according to a predetermined function F(r,$\theta$).

7. The method according to one of the preceding claims, **characterized in that** the area-scanning takes place in a circular, partially circular, spiral-shaped or star-shaped manner.

8. The method according to one of the preceding claims, **characterized in that** the illuminated measuring spot (14) has a diameter of 20 to 300 $\mu$m.

9. A device for the contactless assessment of the surface quality of a disk-shaped, fine-machined workpiece (W), in particular a wafer (W), according to the angle-resolved scattering light measuring technology, comprising

an optical sensor (10) which emits a beam of rays (24) with defined intensity distribution onto the surface of the workpiece (W) to be assessed and illuminates a measuring spot (14),

a line sensor (16) with a discrete number (i) of photodetectors (18), which detects the reflected intensity ($I_i$) of the radiation in a defined angular range ($\alpha$) and determines at least one characteristic value (Ig) therefrom,

a rotary device (40) which rotatably mounts the workpiece (W), wherein a rotation angle sensor (44) detects the rotation angle ($\beta$),

a positioning device (46) which orients the sensor (10) relative to the surface of the workpiece (W) such that its measuring axis (20) is perpendicular to the surface, wherein the positioning device (46) mounts the sensor (10) movably in a radial direction (r) relative to the surface of the workpiece (W) and rotatably about its measuring axis (20) by an angle ($\theta$),

a computer-aided control (50), which controls the positioning device (46) as well as the rotary device (40) and which is also connected to the sensor (10) and which evaluates the signals therefrom,

wherein in a set-up mode, the positioning device (46) is configured to rotate the sensor (10) at a predetermined measuring position about its measuring axis (20), and the control (50) is configured to determine an initial rotary position with associated initial rotation angle ($\theta$) in which the intensity characteristic value (Ig) is at a maximum, wherein the intensity characteristic value (Ig) is detected as the sum of the intensities of several photodetectors (18) of the line sensor (16),

and wherein subsequently in a measuring mode, the control (50) is configured to calculate from the detected intensity ($I_i$) of the photodetectors (18) at least one characteristic value (Aq, Aq*; M) for the surface quality, while taking into account this initial rotation angle ($\theta$) determined in the set-up mode, wherein the control (50) is configured to area-scan at least one section of the surface of the workpiece, and to change the rotation angle ($\theta$) about the measuring axis (20) of the sensor (10) dependent on the radius (r) of the measuring position on the workpiece.

**10.** The device according to claim 9, **characterized in that** in the measuring mode, the control (50) is set up to determine further characteristic values (Aq, Aq*; M) for the surface quality, wherein a rotation angle ($\theta$) is set resulting from the initial rotation angle plus a correction angle.

**11.** The device according to claim 10, **characterized in that** the correction angle is $\pm 45°$ or $\pm 90°$.

**12.** The device according to one of the preceding claims, in which in the measuring mode, the rotary device (40) is configured to rotate the workpiece (W) by a predetermined angle ($\beta$) and the sensor (10) is configured to scan the surface of the workpiece (W) continuously and to determine the curve of the characteristic value or the characteristic values along the associated circular path.

**13.** The device according to one of the preceding claims, **characterized in that** the illuminated measuring spot (14) has a diameter of 20 to 300 $\mu$m.

**Revendications**

**1.** Procédé d'évaluation sans contact de l'état de surface d'une pièce (W) en forme de disque ayant été soumise à un usinage fin, en particulier d'une tranche (W), selon la technique de mesure par lumière diffusée à résolution angulaire,
où un capteur optique (10) envoie un faisceau lumineux (24) à distribution d'intensité définie sur la surface à évaluer de la pièce (W) et éclaire un spot de mesure (14),
l'intensité ($I_i$) réfléchie du rayonnement est détectée au moyen d'un capteur linéaire (16) avec un nombre (i) discret de photodétecteurs (18) dans une plage angulaire ($\alpha$) définie et au moins une valeur caractéristique d'intensité (Ig) est déterminée à partir de celle-ci,
la pièce (W) est montée en rotation dans un dispositif rotatif (40) et l'angle de rotation ($\beta$) est détecté,
le capteur (10) est orienté dans un dispositif de positionnement par rapport à la surface de la pièce (W), de sorte que son axe de mesure (20) est perpendiculaire à la surface, dans lequel le dispositif de positionnement (46) supporte le capteur (10) de manière coulissante dans la direction radiale (r) par rapport à la surface de la pièce (W) et de manière rotative selon un angle ($\theta$) autour de l'axe de mesure (20) de celui-ci,
dans un mode de fonctionnement d'installation, le capteur (10) est amené en rotation autour de son axe de mesure (20) dans une position de mesure prédéfinie et une position rotative initiale avec un angle de rotation initial ($\theta$) associé est déterminée, dans laquelle la valeur caractéristique d'intensité (Ig) est maximale, dans lequel la somme des intensités de plusieurs photodétecteurs (18) du capteur linéaire (16) est déterminée comme valeur caractéristique d'intensité (Ig),
et où, après cela, dans un mode de fonctionnement de mesure, une commande (50), en prenant en compte cet angle de rotation initial ($\theta$) déterminé dans le mode de fonctionnement d'installation, calcule à partir de l'intensité ($I_i$) détectée des photodétecteurs (18) au moins une valeur caractéristique (Aq ; Aq* ; M) concernant l'état de surface, dans lequel au moins une partie de la surface de la pièce est balayée de manière surfacique et, en fonction du rayon (r) de la position de mesure sur la pièce, l'angle de rotation ($\theta$) autour de l'axe de mesure (20) du capteur (10) est modifié.

**2.** Procédé selon la revendication 1, **caractérisé en ce que**, dans le mode de fonctionnement de mesure, la commande (50) détermine d'autres valeurs caractéristiques (Aq ; Aq* ; M) concernant l'état de surface, où un angle de rotation ($\theta$) est réglé, qui est obtenu à partir de l'angle de rotation initial plus un angle de correction.

**3.** Procédé selon la revendication 2, **caractérisé en ce que** l'angle de correction est $\pm 45°$ ou $\pm 90°$.

**4.** Procédé selon l'une quelconque des revendications précédentes, où la somme des intensités de tous les photodétecteurs (18) du capteur linéaire (16) est déterminée en tant que valeur caractéristique d'intensité (Ig) dans le mode de fonctionnement d'installation.

**5.** Procédé selon l'une quelconque des revendications précédentes, où, dans le mode de fonctionnement de mesure, le dispositif rotatif (40) amène la pièce (W) en rotation selon un angle ($\beta$) prédéfini et le capteur (10) balaye ce faisant en continu la surface de la pièce (W) et la variation de la valeur caractéristique ou des valeurs caractéristiques le long de la trajectoire circulaire associée est déterminée.

**6.** Procédé selon l'une quelconque des revendications précédentes, **caractérisé en ce que** la modification de l'angle de rotation ($\theta$) s'effectue selon une fonction F (r, $\theta$) prédéfinie.

**7.** Procédé selon l'une quelconque des revendications précédentes, **caractérisé en ce que** le balayage de manière surfacique s'effectue de manière circulaire, en partie circulaire, en spirale ou en étoile.

**8.** Procédé selon l'une quelconque des revendications précédentes, **caractérisé en ce que** le spot de mesure (14) éclairé comprend un diamètre de 20 à 300 $\mu$m.

**9.** Installation pour l'évaluation sans contact de l'état de surface d'une pièce (W) en forme de disque ayant été soumise à un usinage fin, en particulier d'une tranche (W), selon la technique de mesure par lumière diffusée à résolution angulaire, comprenant un capteur optique (10), qui envoie un faisceau lumineux (24) à distribution d'intensité définie sur la surface à évaluer de la pièce (W) et éclaire un spot de mesure (14),

un capteur linéaire (16) avec un nombre (i) discret de photodétecteurs (18), qui détecte l'intensité ($I_i$) réfléchie du rayonnement dans une plage angulaire ($\alpha$) définie et en déduit au moins une valeur caractéristique d'intensité (Ig),

un dispositif rotatif (40), qui supporte en rotation la pièce (W), dans laquelle un capteur d'angle de rotation (44) détecte l'angle de rotation ($\beta$),

un dispositif de positionnement (46), qui oriente le capteur (10) par rapport à la surface de la pièce (W), de sorte que son axe de mesure (20) est perpendiculaire à la surface, dans laquelle le dispositif de positionnement (46) supporte le capteur (10) de manière coulissante dans la direction radiale (r) par rapport à la surface de la pièce (W) et de manière rotative selon un angle ($\theta$) autour de l'axe de mesure (20) de celui-ci,

une commande (50) assistée par ordinateur, qui commande le dispositif de positionnement (46) ainsi que le dispositif rotatif (40) et est également reliée au capteur (10) et évalue les signaux de celui-ci,

dans laquelle, dans un mode de fonctionnement d'installation, le dispositif de positionnement (46) est conçu pour amener le capteur (10) en rotation autour de l'axe de mesure (20) de celui-ci dans une position de mesure prédéfinie et la commande (50) est conçue pour déterminer une position rotative initiale avec un angle de rotation initial ($\theta$) associé, dans laquelle la valeur caractéristique d'intensité (Ig) est maximale, dans laquelle la somme des intensités de plusieurs photodétecteurs (18) du capteur linéaire (16) est déterminée comme valeur caractéristique d'intensité (Ig),

et dans laquelle, après cela, dans un mode de fonctionnement de mesure, la commande (50) est conçue, en prenant en compte cet angle de rotation initial ($\theta$) déterminé dans le mode de fonctionnement d'installation, pour calculer à partir de l'intensité ($I_i$) détectée des photodétecteurs (18) au moins une valeur caractéristique (Aq ; Aq* ; M) concernant l'état de surface, dans laquelle la commande (50) est conçue pour balayer de manière surfacique au moins une partie de la surface de la pièce et, en fonction du rayon (r) de la position de mesure sur la pièce, modifier l'angle de rotation ($\theta$) autour de l'axe de mesure (20) du capteur (10).

**10.** Installation selon la revendication 9, **caractérisée en ce que**, dans le mode de fonctionnement de mesure, la commande (50) est conçue pour déterminer d'autres valeurs caractéristiques (Aq ; Aq* ; M) concernant l'état de surface, dans laquelle un angle de rotation ($\theta$) est réglé, qui est obtenu à partir de l'angle de rotation initial plus un angle de correction.

**11.** Installation selon la revendication 10, **caractérisée en ce que** l'angle de correction est $\pm 45°$ ou $\pm 90°$.

**12.** Installation selon l'une quelconque des revendications précédentes, où, dans le mode de fonctionnement de mesure, le dispositif de rotation (40) est conçu pour amener la pièce (W) en rotation selon un angle ($\beta$) prédéfini et le capteur (10) est conçu pour balayer ce faisant en continu la surface de la pièce (W) et déterminer la variation de la valeur caractéristique ou des valeurs caractéristiques le long de la trajectoire circulaire associée.

**13.** Installation selon l'une quelconque des revendications précédentes, **caractérisée en ce que** le spot de mesure (14) éclairé présente un diamètre de 20 à 300 $\mu$m.

FIG. 1

**FIG. 2a**

FIG. 2b

FIG. 3

Fig. 4

Fig. 5

EP 3 341 679 B1

Fig. 6

Fig. 7

a                    b                    c

d                    e                    f

Fig. 8

Fig. 9

Fig. 10

Fig. 11

EP 3 341 679 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2657686 A1
- DE 4408226 A1
- DE 102012005417 B4
- US 2012092656 A1

**In der Beschreibung aufgeführte Nicht-Patentliteratur**

- **RAINER BRODMANN et al.** Kenngrößen der Mikrostruktur definiert. *QZ Jahrgang,* 2008, vol. 53 (7), 46-49